# EUROPEAN PATENT APPLICATION

(11) **EP 3 431 902 A1**
(43) Date of publication of application: **23.01.2019**
(21) Application number: 18184447.3
(22) Date of filing: 19.07.2018
(51) Int. Cl.: F25B 13/00, F25B 40/06, F25B 49/02

(54) **AIR CONDITIONER AND METHOD FOR OPERATING THE SAME**

(30) Priority: 20.07.2017 JP 2017140884
(71) Applicant: MITSUBISHI HEAVY INDUSTRIES THERMAL SYSTEMS, LTD., Minato-ku Tokyo 108-8215 (JP)
(72) Inventor: Takigawa, Masayuki, Tokyo, 108-8215 (JP); Kato, Takahiro, Tokyo, 108-8215 (JP); Yasuda, Tatsuhiro, Tokyo, 108-8215 (JP); Sakaguchi, Tomohiro, Tokyo, 108-8215 (JP)
(74) Representative: Henkel, Breuer & Partner

(57) **Abstract**

An air conditioner that allows a pressure to quickly reach a desired operating pressure is provided. The air conditioner includes: a compressor 21 compressing a refrigerant; an outdoor heat exchanger 24 condensing the refrigerant compressed by the compressor 21; an indoor electronic expansion valve 72 expanding the liquid refrigerant condensed by the outdoor heat exchanger 24; an indoor heat exchanger 71 evaporating the refrigerant expanded by the indoor electronic expansion valve 72; a superheat degree calculating means configured to calculate a superheat degree of the refrigerant supplied to the compressor 21; and a control unit 10 configured to control opening of the indoor electronic expansion valve 72 on the basis of the superheat degree obtained by the superheat degree calculating means, wherein the control unit 10 is configured to increase an increase rate of opening of the indoor electronic expansion valve 72 when the superheat degree obtained by the superheat degree calculating means reaches or exceeds a predetermined value until a pressure of the refrigerant discharged from the compressor 21 reaches an operating pressure under which an air-conditioning operation is performable.

## Description

### BACKGROUND OF THE INVENTION

### 1. FIELD OF THE INVENTION

The present invention relates to an air conditioner and a method for operating the same.

### 2. DESCRIPTION OF RELATED ART

A multi-type air conditioner having a single outdoor unit and a plurality of indoor units connected to the outdoor unit has been known, as disclosed in Japanese Unexamined Patent Application, Publication No. Hei 8-296912. Opening of an expansion valve of the air conditioner is controlled based on a superheat degree of a refrigerant supplied to a compressor.

During activation of a cooling indoor unit, opening of the expansion valve is controlled to gradually approach a stable opening degree in order to prevent liquid return to the compressor. For this reason, it may take time for the expansion valve to reach the stable opening degree, and this may cause a delay in a high pressure and a low pressure reaching an operating pressure, which may in turn result in poor cooling or poor heating.

The present invention has been made in view of such circumstances and aims to provide an air conditioner that allows a pressure to quickly reach a desired operating pressure as well as a method for operating the air conditioner.

### BRIEF SUMMARY OF THE INVENTION

To solve the above problem, the air conditioner and the method for operating the air conditioner according to the present disclosure adopt the following solutions.

That is, the air conditioner according to an aspect of the present disclosure includes: a compressor compressing a refrigerant; a condenser condensing the refrigerant compressed by the compressor; an expansion valve expanding the liquid refrigerant condensed by the condenser; an evaporator evaporating the refrigerant expanded by the expansion valve; a superheat degree calculating means configured to calculate a superheat degree of the refrigerant supplied to the compressor; and a control unit configured to control opening of the expansion valve on the basis of the superheat degree obtained by the superheat degree calculating means, wherein the control unit is configured to increase an increase rate of opening of the expansion valve when the superheat degree obtained by the superheat degree calculating means reaches or exceeds a predetermined value until a pressure of the refrigerant discharged from the compressor reaches an operating pressure under which an air-conditioning operation is performable.

Opening of the expansion valve is preprogrammed to increase on a predetermined schedule so that a pressure of the refrigerant discharged from the compressor reaches an operating pressure under which an air-conditioning operation is performable. The control unit increases an increase rate of opening of the expansion valve when the superheat degree reaches or exceeds a predetermined value. This aspect enables to increase opening of the expansion valve faster when the superheat degree is secured, allowing the pressure of the refrigerant to quickly reach the operating pressure. This stabilizes the operation faster, eliminating problems such as poor cooling and poor heating.

The increase rate of opening means an increase in opening (increase in pulses) of the expansion valve per unit time.

Further, in the air conditioner according to an aspect of the present disclosure, the control unit is configured to decrease the increase rate of opening of the expansion valve when the superheat degree obtained by the superheat degree calculating means does not exceed the predetermined value until the pressure of the refrigerant discharged from the compressor reaches the operating pressure under which the air-conditioning operation is performable.

With increase in the increase rate of opening of the expansion valve, the expansion valve opens faster. If the expansion valve opens excessively fast, the superheat degree may decrease and the liquid refrigerant may return to the compressor. In view of this, when the superheat degree does not exceed the predetermined value, the increase rate of opening of the expansion valve is decreased to lower the increasing speed of opening of the expansion valve. This aspect ensures a necessary and sufficient increasing speed of opening of the expansion valve.

Further, in the air conditioner according to an aspect of the present disclosure, the superheat degree calculating means is configured to calculate the superheat degree on the basis of a measurement value of a temperature sensor provided to the evaporator.

With the temperature sensor provided to the evaporator, a temperature of the saturated refrigerant and a temperature of the superheated refrigerant are obtained to calculate the superheat degree.

The superheat degree calculating means calculating the superheat degree with the temperature sensor provided to the evaporator is preferably used in increasing the increase rate of opening of the expansion valve. This aspect enables to control opening for each individual expansion valve connected to the evaporator.

Further, in the air conditioner according to an aspect of the present disclosure, the superheat degree calculating means is configured to calculate the superheat degree on the basis of measurement values of a pressure sensor and a temperature sensor both provided to a suction pipe of the compressor.

A saturation temperature is calculated on the basis of the pressure obtained from the pressure sensor provided to the suction pipe of the compressor. By using this saturation temperature and the measurement value of the temperature sensor provided to the suction pipe, the superheat degree is calculated.

The superheat degree calculating means calculating the superheat degree with the pressure sensor and the temperature sensor provided to the suction pipe of the compressor is preferably used in decreasing the increase rate of opening of the expansion valve. This aspect enables to surely determine occurrence of liquid return to the compressor because the superheat degree can be obtained immediately before the refrigerant is sucked into the compressor.

Further, the method for operating the air conditioner according to an aspect of the present disclosure is a method for operating the air conditioner including: a compressor compressing a refrigerant, a condenser condensing the refrigerant compressed by the compressor, an expansion valve expanding the liquid refrigerant condensed by the condenser, an evaporator evaporating the refrigerant expanded by the expansion valve, and a superheat degree calculating means configured to calculate a superheat degree of the refrigerant supplied to the compressor, and the method includes increasing an increase rate of opening of the expansion valve when the superheat degree obtained by the superheat degree calculating means reaches or exceeds a predetermined value until a pressure of the refrigerant discharged from the compressor reaches an operating pressure under which an air-conditioning operation is performable.

The aspect of the present disclosure allows the pressure to quickly reach the desired operating pressure because the increase rate of opening of the expansion valve is increased when the superheat degree reaches or exceeds a predetermined value.

### BRIEF DESCRIPTION OF THE SEVERAL VIEWS OF THE DRAWINGS

FIG. 1 is a diagram illustrating a schematic configuration of a refrigerant circuit of a multi-type air conditioner according to an embodiment of the present disclosure.
FIG. 2 is a schematic configuration diagram of a control device of the multi-type air conditioner shown in FIG. 1.
FIG. 3 is a schematic configuration diagram of a temperature sensor provided to an indoor heat exchanger.
FIG. 4 is a schematic configuration diagram of a temperature sensor and a pressure sensor provided to a suction pipe of a compressor.
FIG. 5 is a flowchart illustrating a control of an indoor electronic expansion valve during activation.
FIG. 6 shows graphs illustrating specific examples of the control of the indoor electronic expansion valve during activation.
FIG. 7 is a chart summarizing the control shown in FIG. 6.
FIG. 8 shows graphs illustrating effects produced by the control shown in FIG. 5.

### DETAILED DESCRIPTION OF THE INVENTION

Hereinafter, an embodiment according to the present disclosure will be explained with reference to the drawings.

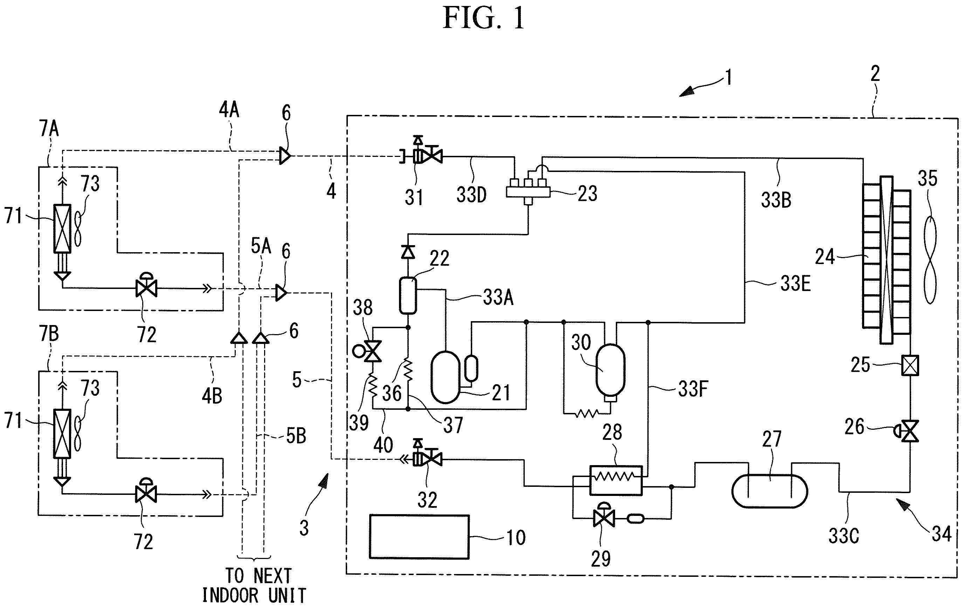

FIG. 1 illustrates a schematic configuration of a refrigerant circuit of a multi-type air conditioning system (air conditioner) 1 according to the present embodiment.

The multi-type air conditioning system 1 includes one outdoor unit 2, a gas-side pipe 4 and a liquid-side pipe 5 both led out from the outdoor unit 2, a plurality of indoor units 7A and 7B connected in parallel between the gas-side pipe 4 and the liquid-side pipe 5 via branching units 6, and a control unit 10. Although FIG. 1 shows two indoor units 7A and 7B, the number of the indoor units may be more than two. Hereinafter, these indoor units may be denoted by the reference numeral 7 as the "indoor units 7" when there is no need to distinguish these indoor units from one another.

The outdoor unit 2 includes an inverter-driven compressor 21 that compresses a refrigerant, an oil separator 22 that separates chiller oil from a refrigerant gas, a four-way switching valve 23 that switches a circulation direction of the refrigerant, an outdoor heat exchanger 24 that exchanges heat between the refrigerant and outdoor air, a supercooling coil 25 integrally formed with the outdoor heat exchanger 24, an outdoor electronic expansion valve for heating (EEVH) 26, a receiver 27 that stores a liquid refrigerant, a supercooling heat exchanger 28 that supercools the liquid refrigerant, an electronic expansion valve for supercooling (EEVSC) 29 that controls an amount of the refrigerant to be branched to the supercooling heat exchanger 28, an accumulator 30 that separates a liquid component from the refrigerant gas to be sucked into the compressor 21 and thereby causes the compressor 21 to only suck a gas component, a gas-side operating valve 31, and a liquid-side operating valve 32. In the vicinity of the outdoor heat exchanger 24, an outdoor fan 35 is provided that sends outdoor air to the outdoor heat exchanger 24.

The above constituents of the outdoor unit 2 are connected to one another via refrigerant pipes including a discharge pipe 33A, a gas pipe 33B, a liquid pipe 33C, a gas pipe 33D, a suction pipe 33E and a supercooling branch pipe 33F. These constituents thus form an outdoor refrigerant circuit 34.

To return the chiller oil separated from the discharged refrigerant gas within the oil separator 22 to the compressor 21 by a predetermined amount at a time, a parallel circuit consisting of a first oil return circuit 37 and a second oil return circuit 40 is connected between the oil separator 22 and the suction pipe 33E of the compressor 21. The first oil return circuit 37 includes a fixed throttle (throttle) 36 such as a capillary tube, and the second oil return circuit 40 includes a solenoid valve 38 and a fixed throttle (throttle) 39 such as a capillary tube.

The gas-side pipe 4 and the liquid-side pipe 5 are the refrigerant pipes respectively connected to the gas-side operating valve 31 and the liquid-side operating valve 32 of the outdoor unit 2. During on-site installation work, lengths of the gas-side pipe 4 and the liquid-side pipe 5 are set according to distances between the outdoor unit 2 and the indoor units 7A and 7B connected to the outdoor unit 2. An appropriate number of the branching units 6 are provided halfway along the gas-side pipe 4 and the liquid-side pipe 5, and an appropriate number of the indoor units 7A and 7B are each connected to the gas-side pipe 4 and the liquid-side pipe 5 via the branching units 6. This constitutes a closed one-system refrigeration cycle 3.

Each of the indoor units 7A and 7B includes an indoor heat exchanger 71 that exchanges heat between the refrigerant and indoor air for use in indoor air conditioning, an indoor electronic expansion valve for cooling (EEVC) 72, and an indoor fan 73 that circulates indoor air through the indoor heat exchanger 71. The indoor units 7A and 7B are connected to the branching units 6 via respective branch gas pipes 4A and 4B and respective branch liquid pipes 5A and 5B on the indoor side.

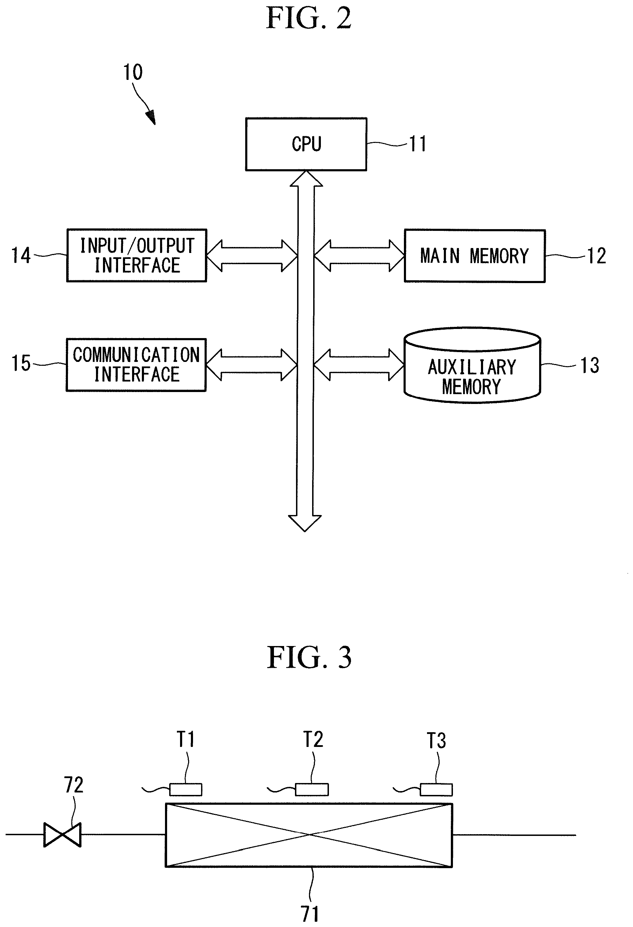

As shown in FIG. 2, the control unit 10 is, for example, configured with a microcomputer that mainly consists of a central processing unit (CPU) 11 executing programs, a main memory 12 such as a random-access memory (RAM) temporality storing calculation results and the like by the CPU 11, an auxiliary memory 13 storing the programs executed by the CPU 11, an input/output interface 14 such as a digital input/output interface, and a communication interface 15.

FIG. 3 illustrates a configuration for calculating a superheat degree of a low-pressure refrigerant supplied to the compressor 21. Each indoor heat exchanger 71 is provided with a first temperature sensor T1, a second temperature sensor T2, and a third temperature sensor T3 in this order from the upstream side of a refrigerant flow on the indoor electronic expansion valve 72 side. Measurement values of the temperature sensors T1, T2 and T3 are sent to the control unit 10. Since the refrigerant expanded by the indoor electronic expansion valve 72 gradually evaporates within the indoor heat exchanger 71, the refrigerant is saturated at the temperature sensor T2, which is at an intermediate position, and superheated at the third temperature sensor T3, which is at a downstream position. Accordingly, the superheat degree at the outlet of the indoor heat exchanger 71 can be obtained by subtracting the temperature sensed by the second temperature sensor T2 from the temperature sensed by the third temperature sensor T3 (T3-T2). This calculation of the superheat degree is performed by the control unit 10.

As will be described later, the superheat degree (an indoor unit SH) obtained by using the second temperature sensor T2 and the third temperature sensor T3 is used for determination to increase an increase rate of opening of the indoor electronic expansion valve 72.

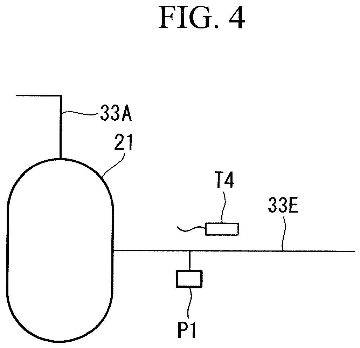

FIG. 4 illustrates a configuration for calculating the superheat degree of the low-pressure refrigerant supplied to the compressor 21, provided apart from the configuration for calculating the superheat degree shown in FIG. 3. The suction pipe 33E connected to the compressor 21 is provided with a suction refrigerant temperature sensor T4 and a suction refrigerant pressure sensor P1. Measurement values of these sensors T4 and P1 are sent to the control unit 10. A superheat degree of a suction refrigerant can be obtained by calculating a saturation temperature with the suction refrigerant pressure sensor P1 and then taking a difference between the saturation temperature and a temperature obtained from the suction refrigerant temperature sensor T4. This calculation of the superheat degree is performed by the control unit 10.

As will be described later, the superheat degree (a compressor suction SH) obtained by using the suction refrigerant temperature sensor T4 and the suction refrigerant pressure sensor P1 is used for determination to decrease the increase rate of opening of the indoor electronic expansion valve 72.

### (Cooling operation)

In the above described multi-type air conditioning system 1, cooling operation is performed as follows.

The high-temperature and high-pressure refrigerant gas compressed by the compressor 21 is discharged to the discharge pipe 33A, and the oil separator 22 separates the chiller oil contained in the refrigerant. The refrigerant gas is then circulated to the gas pipe 33B side via the four-way switching valve 23, and exchanges heat with outdoor air sent by the outdoor fan 35 to be condensed and liquefied in the outdoor heat exchanger 24. This liquid refrigerant is further cooled by the supercooling coil 25, and then passes through the outdoor electronic expansion valve 26 to be temporality stored in the receiver 27.

The liquid refrigerant, whose circulation amount has been regulated in the receiver 27, is partly branched to the supercooling branch pipe 33F while being distributed through the supercooling heat exchanger 28 via the liquid pipe 33C, and exchanges heat with the refrigerant expanded by the electronic expansion valve for supercooling (EEVSC) 29 to thereby be supercooled. This liquid refrigerant is led out from the outdoor unit 2 to the liquid-side pipe 5 via the liquid-side operating valve 32. The liquid refrigerant led out to the liquid-side pipe 5 is further branched to the branch liquid pipes 5A and 5B of the respective indoor units 7A and 7B by the branching units 6.

The liquid refrigerant branched to the branch liquid pipes 5A and 5B flows into the indoor units 7A and 7B, in each of which the liquid refrigerant is expanded by the indoor electronic expansion valve (EEVC) 72 and flows into the indoor heat exchanger 71 as a gas-liquid two-phase flow. In the indoor heat exchanger 71, indoor air circulated by the indoor fan 73 exchanges heat with the refrigerant, and the indoor air is cooled to be used for indoor cooling. Meanwhile, the refrigerant is gasified and led to the branching units 6 via the branch gas pipes 4A and 4B, and merges with the refrigerant gas from the other indoor units in the gas-side pipe 4.

The refrigerant gas having merged in the gas-side pipe 4 returns to the outdoor unit 2 side and reaches the suction pipe 33E via the gas-side operating valve 31, the gas pipe 33D and the four-way switching valve 23. The refrigerant gas then merges with the refrigerant gas from the branch pipe 33F and is led to the accumulator 30. In the accumulator 30, the liquid component contained in the refrigerant gas is separated and the resultant gas component alone is sucked into the compressor 21. This refrigerant is again compressed by the compressor 21. The cooling operation is performed by repeating the above cycle.

### (Heating operation)

Heating operation is performed as follows.

The high-temperature and high-pressure refrigerant gas compressed by the compressor 21 is discharged to the discharge pipe 33A, and the oil separator 22 separates the chiller oil contained in the refrigerant. The refrigerant gas is then circulated to the gas pipe 33D side by the four-way switching valve 23. This refrigerant is led out from the outdoor unit 2 via the gas-side operating valve 31 and the gas-side pipe 4, and further led to the indoor units 7A and 7B via the branching units 6 and the respective branch gas pipes 4A and 4B on the indoor side.

The high-temperature and high-pressure refrigerant gas led to the indoor units 7A and 7B exchanges heat with indoor air circulated by the indoor fan 73 in the indoor heat exchanger 71, and the indoor air is heated to be used for indoor heating. The liquid refrigerant condensed and liquefied in the indoor heat exchanger 71 reaches the branching units 6 via the indoor electronic expansion valve (EEVC) 72 and the branch liquid pipes 5A and 5B, merges with the refrigerant from the other indoor units and then returns to the outdoor unit 2 via the liquid-side pipe 5.

The refrigerant having returned to the outdoor unit 2 reaches the supercooling heat exchanger 28 via the liquid-side operating valve 32 and the liquid pipe 33C and is supercooled as in the cooling operation. The refrigerant then flows into, and is temporarily stored in, the receiver 27, in which the circulation amount of the refrigerant is regulated. This liquid refrigerant is supplied via the liquid pipe 33C to the outdoor electronic expansion valve (EEVH) 26, in which the liquid refrigerant is expanded. The liquid refrigerant then flows into the outdoor heat exchanger 24 via the supercooling coil 25.

In the outdoor heat exchanger 24, the refrigerant exchanges heat with outdoor air sent by the outdoor fan 35 and absorbs heat from the outdoor air to evaporate into gas. This refrigerant flows out from the outdoor heat exchanger 24 and passes through the gas pipe 33B, the four-way switching valve 23 and the suction pipe 33E to merge with the refrigerant from the supercooling branch pipe 33F. Thereafter, the refrigerant is led to the accumulator 30. In the accumulator 30, the liquid component contained in the refrigerant gas is separated and the resultant gas component alone is sucked into the compressor 21. This refrigerant is again compressed by the compressor 21. The heating operation is performed by repeating the above cycle.

During the cooling operation and the heating operation as described above, the chiller oil separated from the discharged refrigerant gas in the oil separator 22 is returned to the compressor 21 side via the parallel circuit of the first oil return circuit 37 including the fixed throttle 36 and the second oil return circuit 40 including the solenoid valve 38 and the fixed throttle 39. This secures a certain amount of the chiller oil in the compressor 21 and allows slide portions in the compressor 21 to be lubricated. The solenoid valve 38 provided to the second oil return circuit 40 is operative to open and close at appropriate timing during the steady cooling operation and the steady heating operation, and the solenoid valve 38 thereby regulates an amount by which the oil separated in the oil separator 22 is to be returned to the compressor 21 side.

### (Activation control)

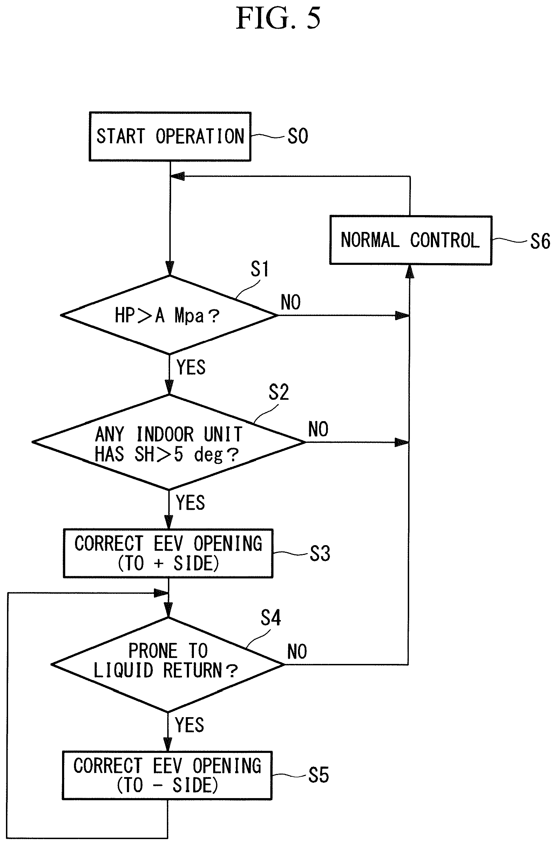

Then, an activation control will be explained with reference to FIG. 5. The flowchart shown in FIG. 5 is executed based on a command from the control unit 10.

Before start of operation, the compressor 21 is stopped and the indoor electronic expansion valve 72 is closed.

When the operation is started (step S0), the compressor 21 is activated to gradually increase the rotation speed, which increases a high-pressure side pressure (HP). Opening of the indoor electronic expansion valve 72 is increased based on a defined pattern on a predetermined schedule (hereinafter, this control of the indoor electronic expansion valve 72 is referred to as the "normal control").

When the high-pressure side pressure (HP) discharged from the compressor 21 exceeds a predetermined value A (step S1), the procedure moves to step S2. Note that step S1 may be omitted for a cooling/heating switching multi-type air conditioner. Step 1 is required for a cooling/heating automatic multi-type air conditioner, which allows mixed cooling and heating operations, because a predetermined high-pressure side pressure (HP) is required to stabilize the operation.

When the high-pressure side pressure (HP) does not exceed the predetermined value in step 1, the procedure moves to step 6 and performs the normal control.

Step 2 determines whether the superheat degree (indoor unit SH), which is calculated from the second temperature sensor T2 and the third temperature sensor T3 as shown in FIG. 3, exceeds a predetermined value (e.g. 5C°) in any of a plurality of indoor heat exchangers 71 during cooling operation. For an indoor heat exchanger 71 whose indoor unit superheat degree SH exceeds the predetermined value, the procedure moves to step 3 and corrects opening of the indoor electronic expansion valve 72 (EEV opening) to the plus side to thereby increase the increase rate. For an indoor heat exchanger 71 whose indoor unit superheat degree SH does not exceed the predetermined value, the procedure moves to step 6 and performs the normal control.

Subsequent step 4 determines whether the compressor 21 is prone to liquid return. More specifically, step 4 determines whether a superheat degree (compressor suction SH), which is calculated from the suction refrigerant temperature sensor T4 and the suction refrigerant pressure sensor P1 as shown in FIG. 4, does not exceed a predetermined value (e.g. 5C°). When the compressor suction SH does not exceed the predetermined value, the compressor 21 is determined to be prone to liquid return and the procedure moves to step 5, in which opening of the indoor electronic expansion valve 72 (EEV opening) during cooling operation is corrected to the minus side to thereby decrease the increase rate. When the compressor suction SH exceeds the predetermined value, the procedure moves to step 6 and performs the normal control.

After correcting the EEV opening in step 5, the procedure again returns to step 4 and determines whether the compressor 21 is prone to liquid return.

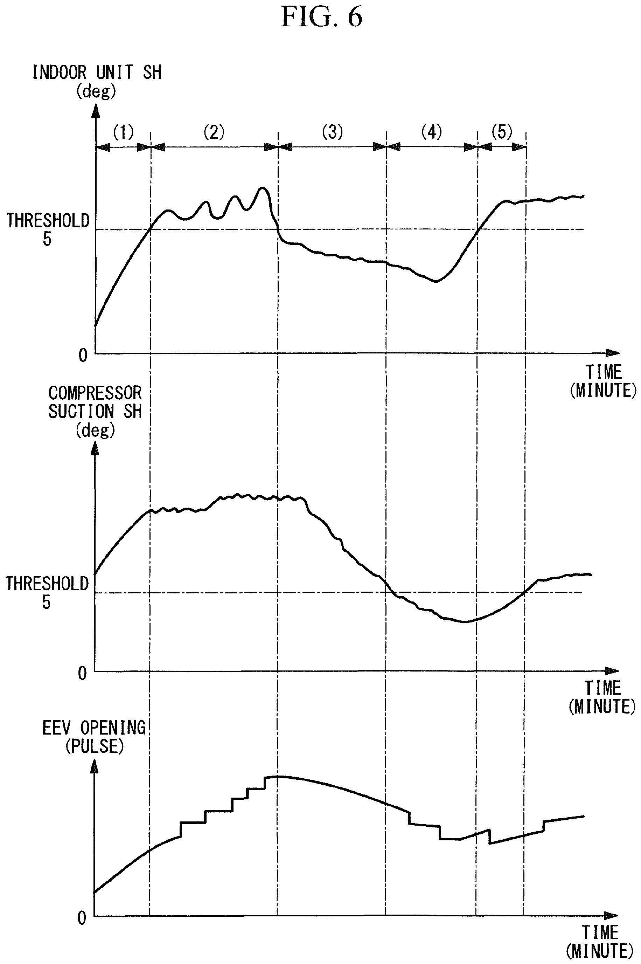

Next, specific examples of the control of the indoor electronic expansion valve 72 will be explained in detail with reference to FIG. 6.

In each of the upper, middle and lower graphs of FIG. 6, the horizontal axis indicates time (minute). The vertical axis in the upper graph indicates the superheat degree (indoor unit SH [deg]) calculated from the second temperature sensor T2 and the third temperature sensor T3 as shown in FIG. 3. The vertical axis in the middle graph indicates the superheat degree (compressor suction SH [deg]) calculated from the suction refrigerant temperature sensor T4 and the suction refrigerant pressure sensor P1 shown in FIG. 4. The vertical axis in the lower graph indicates the increase rate of opening of the indoor electronic expansion valve 72 (EEV opening [pulse]). As shown in the lower graph, in response to the increase rate of opening of the indoor electronic expansion valve 72 being corrected (hereinafter referred to as the "EEV opening correction"), the increase rate of opening changes. Note that the increase rate of opening means an increase in opening (increase in pulses) per unit time.

As shown in the upper graph of FIG. 6, during the period (1), which is an activation period, the indoor unit SH is below the threshold of 5C° and the compressor suction SH exceeds the threshold of 5C°. Accordingly, the EEV opening correction is not performed and the normal control is performed.

During the period (2), both of the indoor unit SH and the compressor suction SH exceed the threshold. Accordingly, the EEV opening is corrected to the plus side to increase the increase rate of opening.

During the period (3), the indoor unit SH is below the threshold and the compressor suction SH exceeds the threshold. Accordingly, the EEV opening correction is not performed and the normal control is performed.

During the period (4), both of the indoor unit SH and the compressor suction SH are below the threshold. Accordingly, the EEV opening is corrected to the minus side to decrease the increase rate of opening.

During the period (5), the indoor unit SH exceeds the threshold and the compressor suction SH is still below the threshold. Accordingly, the EEV opening is corrected to the minus side to decrease the increase rate of opening.

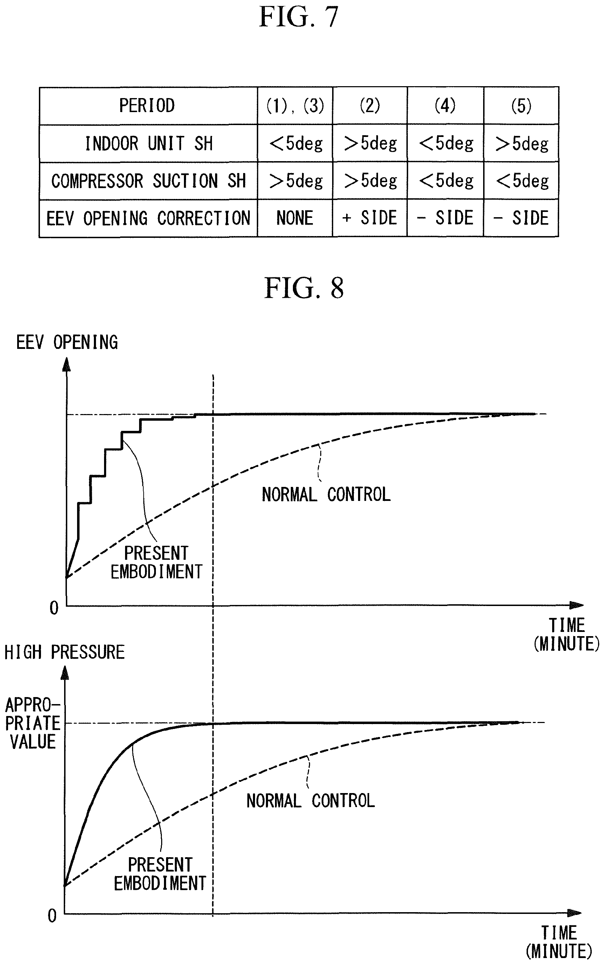

FIG. 7 summarizes the control shown in FIG. 6. As shown in FIG. 7, whether the EEV opening correction is made or not and whether the correction is made to the plus side or to the minus side is determined by whether the indoor unit SH and/or the compressor suction SH exceed the threshold or not. When the compressor suction SH is below the threshold, the EEV opening correction is made to the minus side in order to surely avoid liquid return.

FIG. 8 illustrates effects produced by correcting the opening of the indoor electronic expansion valve 72 during activation as described above.

The upper graph of FIG. 8 shows that, as indicated by the solid line, correcting the opening enables to stabilize the opening of the indoor electronic expansion valve 72 (EEV opening) faster than the normal control indicated by the broken line. As shown in the lower graph and indicated by the solid line, this enables to stabilize the high pressure of the refrigerant discharged from the compressor 21 faster than the normal control indicated by the broken line. Note that the appropriate value of the high pressure shown in the lower graph means an operating pressure under which the air-conditioning operation is performable.

As described above, the present embodiment produces the following functions and effects.

Under the normal control, opening of the indoor electronic expansion valve 72 is preprogrammed to increase on a predetermined schedule so that the pressure of the refrigerant discharged from the compressor 21 reaches an operating pressure under which the air-conditioning operation is performable. Further, the control unit 10 increases the increase rate of opening of the indoor electronic expansion valve 72 when the superheat degree reaches or exceeds a predetermined value. This enables to increase opening of the indoor electronic expansion valve 72 faster when the superheat degree is secured, allowing the pressure of the refrigerant to quickly reach the operating pressure. This stabilizes the operation faster, eliminating problems such as poor and poor heating.

Increasing the increase rate of opening of the indoor electronic expansion valve 72 allows the expansion valve to open fast. However, if the indoor electronic expansion valve 72 opens excessively fast, the superheat degree may decrease and the liquid refrigerant may return to the compressor 21. In view of this, when the superheat degree does not exceed the predetermined value, the increase rate of opening of the expansion valve is decreased to lower the increasing speed of opening of the expansion valve. This ensures a necessary and sufficient increasing speed of opening of the expansion valve.

### Reference signs list

1 Multi-type air conditioning system (air conditioner)
2 Outdoor unit
7 Indoor unit
10 Control unit
21 Compressor
33A Discharge pipe
33E Suction pipe
T1 First temperature sensor (superheat degree calculating means)
T2 Second temperature sensor (superheat degree calculating means)
T3 Third temperature sensor (superheat degree calculating means)
T4 Suction refrigerant temperature sensor (superheat degree calculating means)
P1 Suction refrigerant pressure sensor (superheat degree calculating means)

## Claims

1. An air conditioner comprising:
a compressor compressing a refrigerant;
a condenser condensing the refrigerant compressed by the compressor;
an expansion valve expanding the liquid refrigerant condensed by the condenser;
an evaporator evaporating the refrigerant expanded by the expansion valve;
a superheat degree calculating means configured to calculate a superheat degree of the refrigerant supplied to the compressor; and
a control unit configured to control opening of the expansion valve on a basis of the superheat degree obtained by the superheat degree calculating means, wherein
the control unit is configured to increase an increase rate of opening of the expansion valve when the superheat degree obtained by the superheat degree calculating means reaches or exceeds a predetermined value until a pressure of the refrigerant discharged from the compressor reaches an operating pressure under which an air-conditioning operation is performable.

2. The air conditioner according to claim 1, wherein the control unit is configured to decrease the increase rate of opening of the expansion valve when the superheat degree obtained by the superheat degree calculating means does not exceed the predetermined value until the pressure of the refrigerant discharged from the compressor reaches the operating pressure under which the air-conditioning operation is performable.

3. The air conditioner according to claim 1 or 2, wherein the superheat degree calculating means is configured to calculate the superheat degree on a basis of a measurement value of a temperature sensor provided to the evaporator.

4. The air conditioner according to any one of claims 1 to 3, wherein the superheat degree calculating means is configured to calculate the superheat degree on a basis of measurement values of a pressure sensor and a temperature sensor both provided to a suction pipe of the compressor.

5. A method for operating an air conditioner including a compressor compressing a refrigerant, a condenser condensing the refrigerant compressed by the compressor, an expansion valve expanding the liquid refrigerant condensed by the condenser, an evaporator evaporating the refrigerant expanded by the expansion valve, and a superheat degree calculating means configured to calculate a superheat degree of the refrigerant supplied to the compressor, the method comprising:
increasing an increase rate of opening of the expansion valve when the superheat degree obtained by the superheat degree calculating means reaches or exceeds a predetermined value until a pressure of the refrigerant discharged from the compressor reaches an operating pressure under which an air-conditioning operation is performable.
